# EUROPÄISCHE PATENTANMELDUNG

(11) **EP 2 420 257 A1**
(43) Veröffentlichungstag der Anmeldung: **22.02.2012**
(21) Anmeldenummer: 11005646.2
(22) Anmeldetag: 11.07.2011
(51) Int. Cl.: A61L 2/00, A61L 2/20, C02F 1/32, H01J 61/30

(54) **Reaktor zur Entkeimung oder Aufbereitung einer Flüssigkeit durch den kombinierten Einsatz von UVC-Strahlung und Ozon sowie Quecksilberdampflampe zum Einsatz in dem Reaktor**

(30) Priorität: 21.07.2010 DE 102010031867
(71) Anmelder: Heraeus Noblelight GmbH, 63450 Hanau (DE)
(72) Erfinder: Voronov, Alex, Dr., 63452 Hanau (DE)
(74) Vertreter: Kühn, Hans-Christian

(57) **Zusammenfassung**

Es wird ausgegangen von einem Reaktor zur Entkeimung oder Aufbereitung einer Flüssigkeit durch den kombinierten Einsatz von UVC-Strahlung und Ozon, mit einem Flüssigkeitsbehälter zur Aufnahme der zu behandelnden Flüssigkeit, in dem eine Quecksilberdampflampe zur Emission der UVC-Strahlung angeordnet ist, wobei die Quecksilberdampflampe einen eine Längsachse aufweisenden Lampenkolben umfasst, der unter Belassung eines umlaufenden Spalts von einem Hüllrohr umgeben ist, das einen Gaseinlass für ein zu ozonisierendes, sauerstoffhaltiges Gas und einen Gasauslass aufweist. Um hiervon ausgehend einen in wirtschaftlicher und apparativer Hinsicht optimierten Reaktor bereitzustellen, wird erfindungsgemäß vorgeschlagen, dass der Lampenkolben in einem Mittelabschnitt einen ersten Außendurchmesser und im Bereich seiner Enden einen zweiten Außendurchmesser aufweist, der größer ist als der erste Au-Bendurchmesser.

## Beschreibung

Die Erfindung betrifft einen Reaktor zur Entkeimung oder Aufbereitung einer Flüssigkeit durch den kombinierten Einsatz von UVC-Strahlung und Ozon, mit einem Flüssigkeitsbehälter zur Aufnahme der zu behandelnden Flüssigkeit, in dem eine Quecksilberdampflampe zur Emission der UVC-Strahlung angeordnet ist, wobei die Quecksilberdampflampe einen eine Längsachse aufweisenden Lampenkolben umfasst, an dessen Enden sich Elektroden in einem geschlossenen Entladungsraum gegenüberliegen, und der unter Belassung eines umlaufenden Spalts von einem Hüllrohr umgeben ist, das für die UVC-Strahlung durchlässig ist, und das einen Gaseinlass für ein zu ozonisierendes sauerstoffhaltiges Gas und einen Gasauslass aufweist.

Außerdem betrifft die Erfindung eine Quecksilberdampflampe für den Einsatz in einem zur Entkeimung oder Aufbereitung einer Flüssigkeit durch den kombinierten Einsatz von UVC-Strahlung und Ozon, die einen eine Längsachse aufweisenden Lampenkolben umfasst, an dessen Enden sich Elektroden in einem geschlossenen Entladungsraum gegenüberliegen

### Stand der Technik

Zur Aufbereitung und Desinfektion von Wasser, wie etwa Bade- und Trinkwasser, aber auch belasteten Abwässern aus Gewerbe- und Industrie, Sickerwässer aus Abfalldeponien oder von Flüssigkeiten, die bei medizinischen oder technischen Anwendungen anfallen oder benötigt werden, wie Dialyseflüssigkeiten oder steriles Reinstwasser, ist eine UV-Bestrahlung allgemein üblich. Dadurch werden die in der Flüssigkeit enthaltenen pathogenen Mikroorganismen (Bakterien, Viren, Einzeller) reduziert.

Die Erzeugung energiereicher UVC-Strahlung erfolgt üblicherweise mittels Quecksilberdampflampen. Die Schwellendosis der applizierten UV-Strahlung zur Erzielung einer keimabtötenden Wirkung liegt je nach Anforderung an die Keimfreiheit in einem Bereich von 100 J/m² bis 1000 J/m², wobei die Wellenlänge der UVC-Strahlung in einem Bereich von etwa 100 nm bis 300 nm, und insbesondere beim Emissionsmaximum von Quecksilberdampflampen um 254 nm liegt.

Die Desinfektion mittels UV-Strahlung allein ist jedoch nicht geeignet, schwer abbaubare organische Stoffe, Geruchsstoffe und Farbstoffe zu beseitigen. Zudem wird bei einer Trübung der Flüssigkeit die Desinfektionsleistung der UV-Bestrah-lungslampen vermindert, da ein Teil der Strahlung bereits im Wasser selbst absorbiert wird, so dass nur dünne Flüssigkeitsschichten wirksam bestrahlt werden können.

Bei hohen Schadstoffbelastungen oder hohen Anforderungen an die Keim- oder Schadstofffreiheit werden die Flüssigkeiten daher ergänzend einer chemischen Behandlung mit Ozon unterzogen, wodurch oxidierbare Inhaltsstoffe beseitigt oder reduziert werden und so eine Klärung herbeigeführt wird.

Zur Erzeugung von Ozon werden üblicherweise Ozon-Generatoren eingesetzt, in denen Luft durch elektrische Entladung ionisiert wird. Dies setzt eine aufwendige Trocknung der Luft voraus. Für eine nennenswerte Reduktion schwer abbaubarer Schadstoffe als auch von Mikroorganismen ist eine Mindest-Ozonkonzentration von beispielsweise 20 mg Ozon pro Liter erforderlich, deren Erzeugung mit hohen Investitions- und Betriebskosten verbunden ist.

Zum wirtschaftlichen Betreiben solcher physikalisch-chemischen Abwasserreinigungsverfahren mit einer kombinierten Ozon- und UV-Behandlung ist es auch nachteilig, dass die UV-Strahler und die Ozongeneratoren unterschiedliche Systeme darstellen, die sowohl zwei verschiedene Stromversorgungen (Netzteile) als auch zwei verschiedene Reaktoren benötigen, die sich bezüglich ihrer praktischen Betriebsdaten (Erwärmung, Alterung, Verschmutzung, Wartung) auch sehr unterschiedlich verhalten.

Diesen Nachteil vermeiden Reaktoren, die eine kombinierte photochemische Behandlung von Flüssigkeiten durch UV-Bestrahlung und Ozoneinspeisung bei direkter Ozonerzeugung mittels der UV-Strahlung ermöglichen. Derartige Reaktoren sind beispielsweise beschrieben in DE 27 56 400 A1, DE 695 27 086 T2, DE 101 29 663 A1 und der DE 28 25 018 C2, aus der ein Reaktor der eingangs genannten Gattung bekannt ist.

Für die UV-induzierte Ozonerzeugung kommt insbesondere ultraviolette Strahlung der Wellenlänge um 185 nm in Frage, die ebenfalls von einer Quecksilberdampflampe emittiert wird.

### Technische Aufgabenstellung

Für die Ozonerzeugung mittels UV-Strahlung ergibt sich jedoch ein relativ geringer Wirkungsgrad, so dass der Energieaufwand zum Erreichen einer ausreichend hohen Ozonkonzentration mittels herkömmlicher Quecksilberdampflampen kaum zu erreichen ist. Diese Art der Ozonproduktion hat sich daher in der Praxis der photochemischen Behandlung von Flüssigkeiten bisher kaum durchgesetzt.

Der Erfindung liegt daher die Aufgabe zugrunde, einen Reaktor für einen Einsatz zur photochemischen Behandlung von Flüssigkeiten bereit zu stellen, der in Bezug auf den kombinierten Einsatz von UVC-Strahlung und Ozonbehandlung in wirtschaftlicher und apparativer Hinsicht optimiert ist.

### Darstellung der Erfindung

Hinsichtlich des Reaktors wird diese Aufgabe ausgehend von einem Reaktor der eingangs genannten Gattung erfindungsgemäß dadurch gelöst, dass der Lampenkolben in einem Mittelabschnitt zwischen den Elektroden einen ersten Außendurchmesser und im Bereich seiner Enden einen zweiten Außendurchmesser aufweist, der größer ist als der erste Außendurchmesser.

Beim erfindungsgemäßen Reaktor ist mindestens eine Quecksilberdampflampe in einem Flüssigkeitsbehälter angeordnet, in dem die zu behandelnde Flüssigkeit enthalten ist oder der von der Flüssigkeit durchströmt wird. Die Quecksilberdampflampe dient sowohl zur Erzeugung von UVC-Strahlung einer Wellenlänge um 254 nm, der eine keimabtötende oder -schwächende Wirkung zukommt, als auch zur Erzeugung von UV-Strahlung mit einer Wellenlänge um 185 nm, die zusätzlich eine Ozonbildung bewirkt, welches der zu behandelnden Flüssigkeit vor, bei oder nach der UVC-Behandlung zugeführt wird.

Es besteht somit allgemein die Anforderung, dass sowohl die Strahlungsleistung bei 254 nm als auch die Ozonerzeugung ausreichend hoch sind.

Bei der UV-induzierten Ozonerzeugung wird ein Sauerstoffmolekül durch Absorption von UV-Strahlung in zwei Sauerstoffatome dissoziiert. Das reaktive Sauerstoffatom kann beim nächsten

Zusammenstoß mit einem Sauerstoffmolekül unter Bildung eines Ozon-Moleküls (O₃) reagieren. Zur Absorption der Photonen der UV-Strahlung ist eine gewisse Weglänge erforderlich.

Dieser Ozonbildungsprozess läuft beim erfindungsgemäßen Reaktor innerhalb des umlaufenden Ringspalts zwischen dem Lampenkolben und dem Hüllrohr ab. Dem Ringspalt wird zu diesem Zweck ein sauerstoffhaltiges Gas zugeführt. Durch Vergrößern der Ringspaltweite ergibt sich eine längere Weglänge für die UV- Absorption und eine größere Ausbeute an Ozon.

Eine Vergrößerung der Ringspaltweite kann prinzipiell durch Einsatz eines Hüllrohres mit größerem Innendurchmesser erreicht werden oder durch Einsatz einer Quecksilberdampflampe mit einem Lampenkolben mit kleinerem Außendurchmesser. Größere Hüllrohre sind teuer und sie verändern den Strömungswiderstand für die Flüssigkeit. Daher werden möglichst dünne Hüllrohre angestrebt. Der Einsatz kleinerer Quecksilberdampflampen geht mit einer geringeren Nominalleistung einher und führt zu einer geringeren UV-Leistung insgesamt, was in der Regel auch nicht akzeptabel ist.

Diese Schwierigkeiten umgeht die Erfindung, indem der Lampenkolben der Quecksilberdampflampe nicht zylinderförmig ausgeführt ist, sondern in einem Mittelabschnitt einen kleineren Außendurchmesser aufweist als im Bereich seiner stirnseitigen Enden, in denen die Elektroden aufgenommen sind. Der Lampenkolben ist beispielsweise "hundeknochenartig" mit beiderseits verdickten Enden ausgebildet. Demzufolge stellt sich im Einbau in ein zylinderförmiges Hüllrohr ein Ringspalt ein, der über die Länge des Mittelabschnitts größer ist als in den Endbereichen des Lampenkolbens. Dies hat folgende Auswirkungen:
1. Bei gleichem Innendurchmesser des Hüllrohres ergibt sich eine Ringspalt-Vergrößerung im Mittelabschnitt, so dass eine längere Wegstrecke für die Absorption der Photonen der UV-Strahlung zur Verfügung steht und sich demzufolge eine höhere Ozon-Konzentration im Ringspalt einstellt.
2. Größe und Stärke der Elektroden einer Quecksilberdampflampe sind so ausgelegt, dass sie dem nominalen Lampenstrom standhalten. Die dickeren Enden des Lampenkolbens erlauben ein Elektrodendesign, das an und für sich nur Lampenkolben mit größerem Innendurchmesser ermöglichen. Sie erlauben die Aufnahme von Elektroden, die größer und stärker sind, als es mit einem zylinderförmigen Lampenkolben mit dem kleineren Außendurchmesser (des Mittelabschnitts) möglich wäre. Im Vergleich dazu sind höhere UV-Nominalleistungen erzielbar.

Der erfindungsgemäße Reaktor gewährleistet somit sowohl eine hohe UV-Strahlungsleistung bei einer Wellenlänge 254 nm als auch eine hohe Ozonerzeugung.

Das durch den Ringspalt geleitete und mit Ozon angereicherte Gas wird über den Gasauslass der zu reinigenden Flüssigkeit zugeführt. Hierfür ist der Gasauslass beispielsweise fluidisch mit dem Flüssigkeitsbehälter oder mit einem anderen Reaktionsbehälter für die Ozonbehandlung der Flüssigkeit verbunden.

Die Ozonerzeugung ist umso höher, je länger der breitere Ringspalt und der Abschnitt des Lampenkolbens mit kleinerem Außendurchmesser sind. Daher sind die verdickten Enden des Lampenkolbens so kurz wie möglich und nur so lang wie nötig, um die Elektroden sicher und stabil aufzunehmen. Von daher hat es sich bewährt, wenn sich der Mittelabschnitt über eine Länge erstreckt, die mindestens 80 %, vorzugsweise mindestens 90 % der Gesamtlänge des Lampenkolbens ausmacht.

Bei Lampenkolben mit Quetschenden berechnet sich die Gesamtlänge des Lampenkolbens einschließlich der Quetschenden. Typischerweise weist der Mittelabschnitt eine Länge von mindestens 50 cm, vorzugsweise mindestens 80 cm auf.

Die Erhöhung der Ozonproduktion im Vergleich zu einer üblichen Quecksilberdampflampe mit zylinderförmigen Lampenkolben ist umso ausgeprägter, je größer die Verbreiterung des Ringspalts im Mittelabschnitt ist. Im Hinblick darauf wird eine Ausführungsform des Reaktors bevorzugt, bei der der mittlere Außendurchmesser im Mittelabschnitt um mindestens 25%, vorzugsweise um mindestens 30 % keiner ist als der mittlere Außendurchmesser im Bereich der Enden - bezogen auf den mittlere Außendurchmesser im Bereich der Enden des Lampenkolbens.

Bei nicht einheitlichem Außendurchmesser über die jeweiligen Teillängen ergibt sich der mittlere Außendurchmesser als geometrischer Mittelwert. Typischerweise ist der mittlere Außendurchmesser im Mittelabschnitt um mindestens 4 mm, vorzugsweise um mindestens 6 mm keiner als der mittlere Außendurchmesser im Bereich der Enden des Lampenkolbens.

Es hat sich bewährt, als Quecksilberdampflampe eine Quecksilberniederdrucklampe mit einer Nominalleistung von mindestens 300 Watt einzusetzen.

Quecksilberniederdrucklampen bieten einen ausgezeichneten Wirkungsgrad. Etwa 40 % der elektrischen Leistung wird in UVC-Strahlung bei 254 nm umgewandelt.

Der Lampenkolben ist im einfachsten Fall aus stirnseitig miteinander verschweißten Quarzglas-Rohrstücken zusammengesetzt.

Es hat sich als günstig erwiesen, wenn Mittel zur Erzeugung einer Strömung der Flüssigkeit durch den Flüssigkeitsbehälter vorgesehen sind, und dass am Gasauslass ein durch die Strömung erzeugter Unterdruck anliegt. Der Flüssigkeitsbehälter ist beispielsweise als Strömungsrohr ausgebildet. Infolge des Unterdrucks am Gasauslass wird das mit Ozon beladene, sauerstoffhaltige Gas in die Flüssigkeit eingesaugt. Das Einsaugen wird durch die Strömung der Flüssigkeit bewirkt, ohne dass hierfür eine Pumpe erforderlich ist. Die Strömung der Flüssigkeit wird beispielsweise mittels Förderpumpe oder aufgrund des im Flüssigkeits-Fördersystem inhärenten Förderdrucks, wie beispielsweise mittels hydrostatischem Druck, erzeugt.

Bei dem dem Ringspalt zugeführten sauerstoffhaltigen Gas handelt es sich im einfachsten Fall um Luft.

Hinsichtlich der Quecksilberdampflampe wird die oben genannte Aufgabe ausgehend von einer Quecksilberdampflampe der eingangs genannten Gattung erfindungsgemäß dadurch gelöst, dass der Lampenkolben in einem Mittelabschnitt zwischen den Elektroden einen ersten Außendurchmesser und im Bereich seiner Enden einen zweiten Außendurchmesser aufweist, der größer ist als der erste Außendurchmesser.

Die erfindungsgemäße Quecksilberdampflampe unterscheidet sich von üblichen stabförmigen Quecksilberdampflampen in der Form ihres Lampenkolbens. Dieser ist nicht zylinderförmig ausgeführt, sondern er weist in einem Mittelabschnitt einen kleineren Außendurchmesser auf als im Bereich seiner stirnseitigen Enden, in denen die Elektroden aufgenommen sind. Der Lampenkolben ist beispietsweise "hundeknochenartig" mit beiderseits verdickten Enden ausgebildet.

Größe und Stärke der Elektroden einer Quecksilberdampflampe sind so ausgelegt, dass sie dem nominalen Lampenstrom standhalten. Die dickeren Enden des Lampenkolbens erlauben ein Elektrodendesign, das bei zylinderförmigen Lampenkolben einen größeren Innendurchmesser verlangen würde. Oder anders ausgedrückt, die verdickten Enden erlauben die Aufnahme von Elektroden, die größer und stärker sind, als es mit einem zylinderförmigen Lampenkolben mit dem kleineren Außendurchmesser (nämlich dem des Mittelabschnitts) möglich wäre. Somit sind trotz vergleichsweise schmalem Außendurchmesser (im Mittelabschnitt) hohe UV-Nominalleistungen erzielbar.

Die erfindungsgemäße Quecksilberdampflampe eignet sich insbesondere für den Einsatz in einem Reaktor gemäß der Erfindung. Denn beim im Einbau in ein zylinderförmiges Hüllrohr stellt sich ein Ringspalt zwischen Hüllrohr und Lampenkolben ein, der über die Länge des Mittelabschnitts größer ist als in den Endbereichen des Lampenkolbens. Die Ringspalt-Vergrößerung über den Mittelabschnitt stellt eine längere Wegstrecke für die Absorption der Photonen der UV-Strahlung zur Verfügung, so dass sich demzufolge eine höhere Ozon-Konzentration im Ringspalt einstellt.

Vorteilhafte Ausgestaltungen der erfindungsgemäßen Quecksilberdampflampe ergeben sich aus den Unteransprüchen. Soweit in den Unteransprüchen angegebene Ausgestaltungen der Quecksilberdampflampe den in Unteransprüchen zum erfindungsgemäßen Reaktor genannten Merkmalen entsprechen wird zur ergänzenden Erläuterung auf die obigen Ausführungen zum erfindungsgemäßen Reaktor verwiesen.

### Ausführungsbeispiel

Nachfolgend wird die Erfindung anhand von Ausführungsbeispielen und einer Zeichnung näher erläutert. Es zeigt in schematischer Darstellung im Einzelnen:
- **Figur 1**: einen Reaktor zur Aufbereitung von Abwasser mit einer Baueinheit aus Hüllrohr und Quecksilberdampflampe mit nicht-zylindrischen Lampenkolben gemäß der Erfindung in einer Seitenansicht,
- **Figur 2**: zum Vergleich, eine Baueinheit aus Hüllrohr und Quecksilberdampflampe mit einem zylindrischen Lampenkolben in einer Seitenansicht, und
- **Figur 3**: eine Einzeldarstellung der erfindungsgemäßen Quecksilberdampflampe gemäß Figur 1.

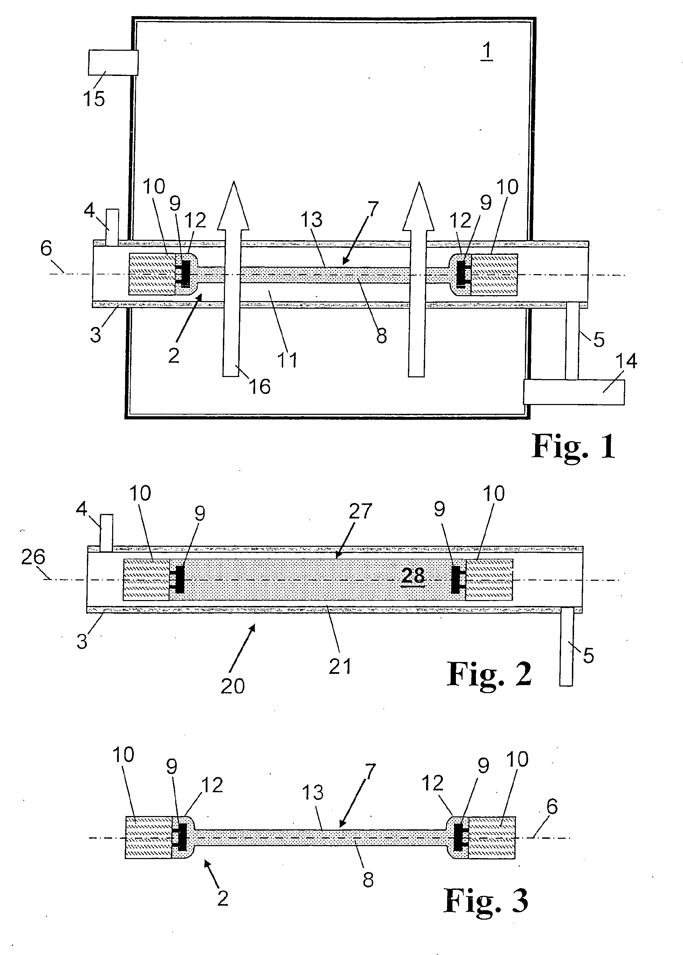

Der Reaktor gemäß **Figur 1** dient zur Entkeimung von Schwimmbadwasser. Er umfasst einen als Strömungsrohr ausgeführten Behälter 1, in dem quer zur Strömungsrichtung eine stabförmige Quecksilberniederdrucklampe 2 angeordnet ist, die von einem Hüllrohr 3 vor dem strömenden Wasser geschützt ist.

Die Quecksilberniederdrucklampe 2 ist für eine Nominalleistung von 450 Watt ausgelegt. Sie weist einen nicht-zylindrischen, hundeknochenartigen Lampenkolben 7 aus Quarzglas mit einer Gesamtlänge von 1,6 m auf. Der Lampenkolben 7 erstreckt sich um eine Mittelachse 6 und umschließt einen Entladungsraum 8, in den von beiden stirnseitigen Enden wendelförmige Elektroden 9 hineinragen. Die Enden des Lampenkolbens 7 sind mit Quetschungen für die vakuumdichte Durchführung der elektrischen Anschlüsse der Elektroden 9 versehen und in Sockeln 10 gehalten.

Der Lampenkolben 7 ist aus drei Rohrstücken zusammengeschweißt. Die beiden Endstücke 12 haben jeweils einen Außendurchmesser von 28 mm und eine Länge von 5 cm, wovon etwa 2 cm auf die Quetschung und etwa 3 cm auf ein rohrförmiges Reststück 12 zur Aufnahme der Elektroden 9 entfallen. Das mittlere Rohrstück 13 hat einen Außendurchmesser von 19 mm und eine Länge von 150 cm.

Das Hüllrohr 3 besteht ebenfalls aus Quarzglas und hat einen Innendurchmesser von 32 mm. Zwischen dem Lampenkolben 7 und der Innenwandung des Hüllrohres 3 ist somit ein umlaufender Ringspalt 11 ausgebildet, der im Mittelteil (13) eine Weite von 6,5 mm und in den Endbereichen (12) eine Weite von 2 mm hat.

Der Behälter 1 weist eine Zuleitung 14 für die Zufuhr des zu entkeimenden Wassers und eine Ableitung 15 dafür auf. Der Ringspalt 11 ist mit einem Lufteinlass 4 und mit einem Luftauslass 5 versehen. Der Luftauslass 5 mündet in die Zuleitung 14 des Behälters 1.

**Figur 2** zeigt nur zum Vergleich eine Baueinheit 20 aus dem Hüllrohr 3 und einer Quecksilberdampflampe mit einem zylindrischen Lampenkolben 27. Der Lampenkolben 27 besteht aus einem einteiligen Quarzglasrohr und hat einen Außendurchmesser von 28 mm. Er umschließt einen zylindrischen Entladungsraum 28, der sich entlang der Längsachse 26 erstreckt. Alle anderen Abmessungen sind dieselben wie der bei der Quecksilberdampflampe 2 von Figur 1.

Somit ergibt sich bei der Baueinheit 20 ein umlaufender Ringspalt 21 zwischen Hüllrohr 3 und Lampenkolben 27 mit einer einheitlichen Weite von 2 mm. Diese Ringspaltweite entspricht etwa 1/3 der maximalen Ringspaltweite der Ausführungsform gemäß Figur 1.

**Figur 3** zeigt eine Einzeldarstellung der erfindungsgemäßen Quecksilberdampflampe 2 in derselben Ausführung wie in Figur 1. Identische Bezugsziffern bezeichnen somit gleiche Bauteil und Bestandteile der Quecksilberdampflampe 2 wie oben anhand Figur 1 bereits erläutert.

Es ist vorgesehen, dem zu behandelnden Wasser sowohl Ozon zuzuführen als auch eine UV-Bestrahlung vorzunehmen. Der Reaktor arbeitet wie folgt:

Das zu entkeimende Wasser wird vorab gefiltert und über die Zuleitung 14 in den Behälter 1 eingeleitet. Beim Durchströmen des Behälters 1 wird das Hüllrohr 3 von dem zu reinigenden Wassers umströmt (die Strömungsrichtung ist mit dem Richtungspfeil 16 symbolisiert) und dabei einer intensiven UV-Bestrahlung ausgesetzt, die von der im Hüllrohr 3 angeordneten Quecksilberdampflampe 2 erzeugt wird.

Infolge der Strömung 16 des Wassers wird im Bereich des Gaseinlasses 4 ein Unterdruck erzeugt und dadurch Luft in den Ringspalt 11 gesaugt. Die Luft wird mit Ozon beladen, das aufgrund der UV-Strahlung der Wellenlänge von 185 nm generiert wird. Dabei ergibt sich wegen des um etwa den Faktor 3 breiteren Ringspalts (gegenüber dem Ringspalt 21 von Figur 2) auch eine um den Faktor 3 höhere Ozonkonzentration in der Luft.

Die mit Ozon beladene Luft wird über den Gasauslass 5 und die Zuleitung 14 in den unteren Bereich des Behälters 1 gedrückt und steigt dort in Form feiner Blasen nach oben und wird gleichzeitig mit Ultraviolettlicht bestrahlt. Hierdurch ergibt sich eine intensive Durchmischung und eine große Verweilzeit der ozonisierten Luft im Behälter 1. Die zuzuführende Ozonkonzentration liegt in einem Bereich von 0,1 g/m³ bis 1 g/m³.

Das begaste und bestrahlte Wasser kann je nach der ursprünglichen Schadstoffbelastung noch Schadstoffe oder unverbrauchtes Ozon enthalten und wird vor Zurückführung in das Schwimmbecken überprüft und erforderlichenfalls weiterbehandelt.

## Patentansprüche

1. Reaktor zur Entkeimung oder Aufbereitung einer Flüssigkeit durch den kombinierten Einsatz von UVC-Strahlung und Ozon, mit einem Flüssigkeitsbehälter (1) zur Aufnahme der zu behandelnden Flüssigkeit, in dem eine Quecksilberdampflampe (2) zur Emission der UVC-Strahlung angeordnet ist, wobei die Quecksilberdampflampe (2) einen eine Längsachse (6) aufweisenden Lampenkolben (7) umfasst, an dessen Enden (12) sich Elektroden (9) in einem geschlossenen Entladungsraum (8) gegenüberliegen, und der unter Belassung eines umlaufenden Spalts (11) von einem Hüllrohr (3) umgeben ist, das für die UVC-Strahlung durchlässig ist, und das einen Gaseinlass (4) für ein zu ozonisierendes, sauerstoffhaltiges Gas und einen Gasauslass (5) aufweist, **dadurch gekennzeichnet, dass** der Lampenkolben (7) in einem Mittelabschnitt (13) zwischen den Elektroden (9) einen ersten Außendurchmesser und im Bereich seiner Enden (12) einen zweiten Außendurchmesser aufweist, der größer ist als der erste Außendurchmesser.

2. Reaktor nach Anspruch 1, **dadurch gekennzeichnet, dass** sich der Mittelabschnitt (13) über eine Länge erstreckt, die mindestens 80 %, vorzugsweise mindestens 90 % der Gesamtlänge des Lampenkolbens (7) ausmacht.

3. Reaktor nach Anspruch 2, **dadurch gekennzeichnet, dass** der Mittelabschnitt (13) eine Länge von mindestens 50 cm, vorzugsweise mindestens 80 cm aufweist.

4. Reaktor nach einem der vorhergehenden Ansprüche, **dadurch gekennzeichnet, dass** der mittlere Außendurchmesser im Mittelabschnitt (13) um mindestens 25%, vorzugsweise um mindestens 30 % keiner ist als der mittlere Außendurchmesser im Bereich der Enden (12) - bezogen auf den mittlere Außendurchmesser im Bereich der Enden (12) des Lampenkolbens (7).

5. Reaktor nach Anspruch 4, **dadurch gekennzeichnet, dass** der mittlere Außendurchmesser im Mittelabschnitt (13) um mindestens 4 mm, vorzugsweise um mindestens 6 mm keiner ist als der mittlere Außendurchmesser im Bereich der Enden des Lampenkolbens (7).

6. Reaktor nach einem der vorhergehenden Ansprüche, **dadurch gekennzeichnet, dass** die Quecksilberdampflampe (2) eine Quecksilberniederdrucklampe mit einer Nominalleistung von mindestens 200 Watt ist.

7. Reaktor nach einem der vorhergehenden Ansprüche, **dadurch gekennzeichnet, dass** der Lampenkolben (7) aus stirnseitig miteinander verschweißten Quarzglas-Rohrstücken zusammengesetzt ist.

8. Quecksilberdampflampe für den Einsatz in einem zur Entkeimung oder Aufbereitung einer Flüssigkeit durch den kombinierten Einsatz von UVC-Strahlung und Ozon, die einen eine Längsachse (6) aufweisenden Lampenkolben (7) umfasst, an dessen Enden (12) sich Elektroden (9) in einem geschlossenen Entladungsraum (8) gegenüberliegen, **dadurch gekennzeichnet, dass** der Lampenkolben (7) in einem Mittelabschnitt (13) zwischen den Elektroden (9) einen ersten Außendurchmesser und im Bereich seiner Enden (12) einen zweiten Außendurchmesser aufweist, der größer ist als der erste Außendurchmesser.

9. Quecksilberdampflampe nach Anspruch 8, **dadurch gekennzeichnet, dass** sich der Mittelabschnitt (13) über eine Länge erstreckt, die mindestens 80 %, vorzugsweise mindestens 90 % der Gesamtlänge des Lampenkolbens (7) ausmacht.

10. Quecksilberdampflampe nach Anspruch 9, **dadurch gekennzeichnet, dass** der Mittelabschnitt (13) eine Länge von mindestens 50 cm, vorzugsweise mindestens 80 cm aufweist.

11. Quecksilberdampflampe nach einem der Ansprüche 8 bis 10, **dadurch gekennzeichnet, dass** der mittlere Außendurchmesser im Mittelabschnitt (13) um mindestens 25%, vorzugsweise um mindestens 30 % keiner ist als der mittlere Außendurchmesser im Bereich der Enden (12) - bezogen auf den mittlere Außendurchmesser im Bereich der Enden (12) des Lampenkolbens (7).

12. Quecksilberdampflampe nach Anspruch 11, **dadurch gekennzeichnet, dass** der mittlere Außendurchmesser im Mittelabschnitt (13) um mindestens 4 mm, vorzugsweise um mindestens 6 mm, keiner ist als der mittlere Außendurchmesser im Bereich der Enden (12) des Lampenkolbens (7).

13. Quecksilberdampflampe nach einem der Ansprüche 8 bis 12, **dadurch gekennzeichnet, dass** der Lampenkolben (7) aus stirnseitig miteinander verschweißten Quarzglas-Rohrstücken zusammengesetzt ist.
